(19) Europäisches Patentamt
European Patent Office
Office européen des brevets

(11) **EP 2 509 439 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**21.06.2017 Patentblatt 2017/25**

(45) Hinweis auf die Patenterteilung:
**23.10.2013 Patentblatt 2013/43**

(21) Anmeldenummer: **10790899.8**

(22) Anmeldetag: **08.12.2010**

(51) Int Cl.:
*A23G 1/30* (2006.01)    *A23G 3/54* (2006.01)
*A23G 1/50* (2006.01)    *A23G 1/54* (2006.01)
*A23L 5/00* (2016.01)    *A23L 33/105* (2016.01)
*A23G 1/40* (2006.01)    *A23G 1/42* (2006.01)
*A23G 3/36* (2006.01)    *A23G 3/42* (2006.01)
*A23G 3/44* (2006.01)    *A23G 1/44* (2006.01)
*A23P 20/10* (2016.01)    *A23L 33/00* (2016.01)
*A23L 33/10* (2016.01)

(86) Internationale Anmeldenummer:
**PCT/EP2010/007448**

(87) Internationale Veröffentlichungsnummer:
**WO 2011/069644 (16.06.2011 Gazette 2011/24)**

(54) **SCHOKOLADEPRODUKT**

CHOCOLATE PRODUCT

PRODUIT EN CHOCOLAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.12.2009 DE 102009057261**

(43) Veröffentlichungstag der Anmeldung:
**17.10.2012 Patentblatt 2012/42**

(73) Patentinhaber: **Funfoods K.S.**
**936 01 Sahy (SK)**

(72) Erfinder: **VON NIESSEN, Stephanie**
**73527 Schwäbisch Gmünd (DE)**

(74) Vertreter: **Schrell, Andreas et al**
**Gleiss Große Schrell und Partner mbB**
**Patentanwälte Rechtsanwälte**
**Leitzstrasse 45**
**70469 Stuttgart (DE)**

(56) Entgegenhaltungen:
EP-A1- 0 324 072        EP-A1- 1 839 496
WO-A1-2006/100516       WO-A2-2009/081144
DE-U1-202010 009 729    US-A- 5 932 273
US-A1- 2007 172 542

- KAFFKA K.J. ET AL: 'Attemps to determine fat, protein and carbohydrate content in Cocoa Powder by the Nir technique' ACTA ALIMENTARIA Bd. 11, Nr. 3, 1982, Seiten 271 - 288
- DYER B.: 'Alkalized Cocoa Powders' 57TH PMCA PRODUCTION CONFERENCE 2003, Seiten 128 - 135

Bemerkungen:
Die Akte enthält technische Angaben, die nach dem Eingang der Anmeldung eingereicht wurden und die nicht in dieser Patentschrift enthalten sind.

EP 2 509 439 B2

**Beschreibung**

Die vorliegende Erfindung betrifft ein Lebensmittelprodukt sowie ein Verfahren zu dessen Herstellung.

Lebensmittel, die nicht allein den Energie- und Nährstoffbedarf eines Körpers decken, sondern darüber hinaus auch weitere Funktionen erfüllen sollen, sind bekannt. Zu diesen Lebensmitteln zählen neben Koffein-haltigen Getränken und Gelen auch Schokoriegel oder Energieriegel, die den Konsumenten über einen interessanten Geschmack hinaus auch eine belebende Wirkung vermitteln.

So sind aus der DE 199 40 747 A1 Schokoladenwaren in Form von Riegeln, Pralinen oder gefüllten Schokoladen bekannt, die eine Schokoladenhülse und eine keksartige Einlage aufweisen, wobei in der keksartigen Einlage ein koffeinhaltiges Gemisch integriert ist. Dieses Produkt soll der mentalen und psychischen Leistungssteigerung dienen.

Aus der WO 03/079818 A1 sind Nahrungsmittelzusammensetzungen bekannt, die Kohlenhydrate, Fette und Proteine aufweisen, wobei auch diese Produkte zur Steigerung der mentalen Aufnahmebereitschaft eines Konsumenten Koffein aufweisen.

Aus der US 2008/0050472 A1 und BE 101 657 3 A6 sind Nahrungsergänzungsstoffe und Lebensmittel bekannt, die Koffein und/oder Taurin enthalten können. Die Druckschriften offenbaren die Verwendung derartiger Stimulantien, insbesondere in Energiegetränken, aber auch in Gelen oder Riegeln.

EP-A-1 839 496 offenbart ein Proteinsystem und Lebensmittelprodukte, welche dieses Proteinsystem in ihrem Kern aufweisen. DE 202010009729 offenbart einen Mantel und einen Kern aufweisende Lebensmittelprodukte, deren Kern gelartig ausgeführt ist und die Taurin und Koffein als Stimulantien enthalten. Die EP 0 324 072 A1 offenbart Getränkekapseln enthaltend Flüssigkeiten oder Sirupe.

Die US 2007/0172542 A1 offenbart Nahrungsmittelriegel, die Stimulantien, z. B. Grünteeextrakte, Ginseng, Taurin, Koffein und/oder Synephrin in einer Menge bis zu 0,16 Gewichts-% aufweisen. Die in diesen Riegeln eingesetzten Stimulantien müssen mit einer vorzugsweise fetthaltigen Beschichtung zumindest teilweise versehen werden, um im verzehrfertigen Produkt keinen unangenehmen, bitteren, von den Stimulantien herrührenden Geschmack zu hinterlassen. Um die Beschichtung der Stimulantien nicht während des Kauvorgangs vorzeitig abzulösen, hat die Zusammensetzung des Riegels eine cremige, den Kauvorgang erleichternde Struktur aufzuweisen.

Der vorliegenden Erfindung liegt das technische Problem zugrunde, ein Lebensmittelprodukt bereitzustellen, das die vorgenannten Nachteile überwindet, insbesondere in möglichst einfacher und kostengünstiger Form ein organoleptisch, insbesondere geschmacklich und optisch attraktives Lebensmittelprodukt bereitzustellen, das keinen vom Konsumenten als nachteilig perzipierten Geschmack, z. B. aufgrund der eingesetzten Stimulantien, und den Konsumenten stimulierende Wirkung aufweist sowie darüber hinaus insbesondere auch in technologischer Hinsicht verbessert ist, insbesondere eine gute Lagerstabilität zeigt.

Die vorliegende Erfindung löst das ihr zugrundeliegende technische Problem durch die Bereitstellung eines Lebensmittelprodukts gemäß der unabhängigen Patentansprüche.

Insbesondere löst die vorliegende Erfindung das ihr zugrundeliegende technische Problem durch die Bereitstellung eines Lebensmittelproduktes gemäß Patentanspruch 1, nämlich umfassend einen Mantel, enthaltend eine Fett- und Kohlenhydratmischung, und einen von dem Mantel zumindest teilweise umhüllten Kern, wobei der Kern in gelartiger Konsistenz vorliegt und einen Gehalt (jeweils Gesamtgewicht der Komponente bezogen auf Gesamtgewicht des Kerns) an a) einer Proteinkomponente von 0,5 bis 10 Gewichts-%, b) einer in Form einer kristallinen und einer nicht-kristallinen Kohlenhydratphase vorliegenden Kohlenhydratkomponente von 65 bis 82 Gewichts-% und c) Wasser von 10 bis 30 Gewichts-% aufweist, und wobei das Lebensmittelprodukt 11 bis 50 Volumen-% Gas im Kern aufweist (Gasvolumen bezogen auf Volumen des Kerns).

In einer besonders bevorzugten Ausführungsform weist das Lebensmittelprodukt im Kern 0,2 bis 8,0 Gewichts-%, insbesondere 0,3 bis 6,0 Gewichts-%, vorzugsweise 0,35 bis 4,0 Gewichts-%, einer koffeinhaltigen Stimulantienkomponente, also einer Stimulanz oder eines Stimulantiengemischs, auf, insbesondere das Stimulanz Koffein. Die koffeinhaltige Komponente kann in besonders bevorzugter Ausführungsform in Form von Koffein, Guarana, Kaffeeextrakt oder Kolanusspulver vorliegen. In besonders bevorzugter Ausführungsform werden 0,3 bis 6,0 Gewichts-%, vorzugsweise 0,35 bis 4,0 Gewichts-%, Koffein als Stimulantienkomponente verwendet. In einer besonders bevorzugten Ausführungsform weist die koffeinhaltige Stimulantienkomponente zusätzlich mindestens ein nichtkoffeinbasiertes Stimulanz auf, ausgewählt aus der Gruppe bestehend aus Taurin und Theobromin. In einer weiteren bevorzugten Ausführungsform werden 0,3 bis 6,0 Gewichts-%, vorzugsweise 0,35 bis 4,0 Gewichts-%, einer koffeinhaltigen Stimulantienkomponente in Form eines Stimulantiengemisches aus Koffein und Taurin oder Koffein und Theobromin eingesetzt. In besonders bevorzugter Ausführungsform ist das Stimulanz Guarana. In besonders bevorzugter Ausführungsform kann das Guarana flüssig oder pulverförmig eingesetzt werden. In besonders bevorzugter Ausführungsform ist das Stimulanz synthetisches Koffein. In besonders bevorzugter Ausführungsform ist das Stimulanz Kaffeeextrakt. In besonders bevorzugter Ausführungsform ist das Stimulanz Kolanusspulver.

In einer besonders bevorzugten Ausführungsform weist die kristalline Kohlenhydratphase Saccharose und Glucose auf, vorzugsweise besteht aus diesen. In einer weiteren bevorzugten Ausführungsform weist die kristalline Kohlenhydratphase Saccharose und Isomaltulose auf, vorzugsweise besteht aus diesen. In einer weiteren bevorzugten Ausführungsform weist die kristalline Kohlenhydratphase Glucose und Isomaltulose auf, vorzugsweise besteht aus diesen. In einer weiteren bevorzugten Ausführungsform weist die kristalline Kohlenhydratphase Saccharose, Glucose und Isomaltulose auf, vorzugsweise besteht aus diesen. In bevorzugter Ausführungsform wird die nicht-kristalline Kohlenhydratphase aus Glucosesirup und optional Wasser gebildet, vorzugsweise besteht aus diesen oder diesem.

In besonders bevorzugter Ausführungsform sieht die Erfindung vor, dass die Kohlenhydratkomponente von 60 bis 90 Gewichts-%, vorzugsweise 70 bis 80 Gewichts-%, insbesondere 75 bis 80 Gewichts-% kristalliner Kohlenhydratphase (Gewicht der kristallinen Phase bezogen auf Gewicht der Trockensubstanz (TS) der Kohlenhydratkomponente) aufweist.

In einer weiteren bevorzugten Ausführungsform ist vorgesehen, dass die Kohlenhydratkomponente von 40 bis 10 Gewichts-%, vorzugsweise 30 bis 20 Gewichts-%, insbesondere 25 bis 20 Gewichts-% nicht-kristalliner Kohlenhydratphase (Gewicht der Trockensubstanz der nicht-kristallinen Phase bezogen auf Gewicht der Trockensubstanz (TS) der Kohlenhydratkomponente) aufweist.

In besonders bevorzugter Ausführungsform beträgt in der kristallinen Kohlenhydratphase der Gewichts-%-Anteil von Saccharose von 40 bis 45, insbesondere 41 bis 44 (Gewicht des Zuckers bezogen auf Gesamtgewicht Kern). In bevorzugter Ausführungsform beträgt in der kristallinen Kohlenhydratphase der Gewichts-%-Anteil von Glucose von 6 bis 9, insbesondere 5 bis 8 (Gewicht des Zuckers bezogen auf Gesamtgewicht Kern).

In bevorzugter Ausführungsform ist vorgesehen, dass 0 bis 5, insbesondere 1 bis 5 Gewichts-% Saccharoseanteil der kristallinen Kohlenhydratphase durch vorzugsweise die gleiche Menge an Isomaltulose ersetzt ist.

In einer bevorzugten Ausführungsform beträgt der Gewichts-%-Anteil (Gewicht Saccharose bezogen auf Gesamtgewicht der kristallinen Kohlenhydratphase) der Saccharose in der kristallinen Kohlenhydratphase von 75 bis 92 Gewichts-%, insbesondere 78 bis 88 Gewichts-%.

In einer bevorzugten Ausführungsform beträgt der Gewichts-%-Anteil (Gewicht Isomaltulose bezogen auf Gesamtgewicht der kristallinen Kohlenhydratphase) der Isomaltulose in der kristallinen Kohlenhydratphase von 0 bis 10 Gewichts-%, insbesondere 1 bis 9 Gewichts-%, vorzugsweise 2 bis 8 Gewichts-%.

In einer bevorzugten Ausführungsform beträgt der Gewichts-%-Anteil (Gewicht kristalline Glucose bezogen auf Gesamtgewicht der kristallinen Kohlenhydratphase) der Glucose in der kristallinen Kohlenhydratphase von 5 bis 25 Gewichts-%, vorzugsweise 8 bis 18 Gewichts-%.

Die nicht-kristalline Kohlenhydratphase kann in Form eines Sirups, insbesondere wässrigen Sirups, vorliegen und trägt in dieser Ausführungsform Wasser zusätzlich zu der in Merkmal c) genannten Menge in den Kern ein.

In einer besonders bevorzugten Ausführungsform liegt die erfindungsgemäß eingesetzte nicht-kristalline Kohlenhydratphase mit einem Trockensubstanzgehalt von 60 bis 90 Gewichts-%, vorzugsweise 65 bis 85 Gewichts-%, insbesondere 70 bis 85 Gewichts-% vor.

In besonders bevorzugter Ausführungsform weist der erfindungsgemäße Kern einen Trockensubstanzgehalt von 70 bis 90 Gewichts-%, insbesondere 75 bis 90 Gewichts-%, insbesondere 75 bis 85 Gewichts-% auf.

Die vorliegende Erfindung löst das ihr zugrundeliegende Problem auch durch die Bereitstellung eines Lebensmittelproduktes gemäß Patentanspruch 2, nämlich umfassend einen Mantel, enthaltend eine, vorzugsweise bestehend aus einer, Fett- und Kohlenhydratmischung, und einen von dem Mantel zumindest teilweise umhüllten Kern, wobei der Kern in gelartiger Konsistenz vorliegt und einen Gehalt (jeweils bezogen auf Gesamtgewicht des Kerns) an

a) einer Proteinkomponente von 0,5 bis 10 Gewichts-%, insbesondere 3 bis 9 Gewichts-%, insbesondere 1 bis 5 Gewichts-%, bevorzugt 2 bis 4 Gewichts-%, vorzugsweise 3 bis 4 Gewichts-%,

b) einer in Form einer kristallinen und einer nicht-kristallinen Kohlenhydratphase vorliegenden Kohlenhydratkomponente von 65 bis 82 Gewichts-%,

c) Wasser von 10 bis 30 Gewichts-% und d) einer Stimulantienmischung aus Taurin und Koffein von 0,20 bis 8,0 Gewichts-%, insbesondere 0,3 bis 6,0 Gewichts-%, vorzugsweise 0,35 bis 4,0 Gewichts-% aufweist.

In einer besonders bevorzugten Ausführungsform wird ein derartiges Lebensmittelprodukt bereitgestellt, wobei die Fett- und Kohlenhydratmischung eine Kakaomischung ist.

Die Erfindung löst das ihr zugrundeliegende technische Problem also durch die Bereitstellung eines Lebensmittelproduktes, umfassend einen Mantel, enthaltend eine, vorzugsweise bestehend aus einer, Kakaomischung, und einen von dem Mantel zumindest teilweise umhüllten Kern, wobei der Kern in gelartiger Konsistenz vorliegt und einen Gehalt (jeweils bezogen auf Gesamtgewicht des Kerns) an den Komponenten a) bis d) aufweist, nämlich einen Gehalt an

a) einer Proteinkomponente von 0,5 bis 10 Gewichts-%, insbesondere 3 bis 9 Gewichts-%, insbesondere 1 bis 5 Gewichts-%, bevorzugt 2 bis 4 Gewichts-%, vorzugsweise 3 bis 4 Gewichts-%,

b) einer in Form einer kristallinen und einer nicht-kristallinen Kohlenhydratphase vorliegenden Kohlenhydratkomponente von 65 bis 82 Gewichts-%,

c) Wasser von 10 bis 30 Gewichts-% und,

d) einer Stimulantienmischung aus Taurin und Koffein in einer Menge von 0,2 bis 8,0 Gewichts-%, insbesondere 0,3 bis 6,0 Gewichts-%, vor-zugsweise 0,35 bis 4,0 Gewichts-%.

Die Erfindung stellt in überraschender und vorteilhafterweise eine Lehre bereit, gemäß der ein organoleptisch, insbesondere geschmacklich und optisch, attraktives Lebensmittelprodukt, insbesondere eine Süßware, bereitgestellt wird, welches hohe Lagerstabilität aufweist. Dieses Lebensmittelprodukt zeichnet sich in einer Ausführungsform der vorliegenden Erfindung durch eine den Konsumenten stimulierende Wirkung aus. In einer besonders bevorzugten Ausführungsform ist die bevorzugt eingesetzte Stimulantienkomponente das Stimulans Guarana. In besonders überraschender und vorteilhafter Weise stellt die vorliegende Erfindung den Vorteil bereit, dass trotz der hohen erfindungsgemäß bevorzugten Konzentration an Guarana von 0,20 bis 8,0 Gewichts-%, insbesondere 0,3 bis 6,0 Gewichts-%, vorzugsweise 0,35 bis 4,0 Gewichts-%, das erfindungsgemäße Lebensmittelprodukt überraschend gut mundet und keinen oder nur einen sehr geringen bitteren Geschmack aufweist. Insbesondere wird durch die Bereitstellung der in einer besonders vorteilhaften gelartigen Konsistenz vorliegenden Kernzusammensetzung, die von einem aus einer Fett- und Kohlenhydrat-haltigen Mischung, insbesondere einer Kakaomischung, hergestellten, vorzugsweise festen, Mantel umhüllt ist, ein organoleptisch äußerst ansprechendes Produkt erhalten, das vorteilhafterweise, anders als beispielsweise bei stimulierenden Getränken, auch in aktiven Bewegungssituationen problemlos konsumiert werden kann und auch unter wechselnden Umweltbedingungen eine hohe Lagerstabilität aufweist. Der mit einem, vorzugsweise aus Schokolade aufgebauten, Mantel umhüllte, in gelartiger Konsistenz vorliegende Kern vermittelt in genau dieser Kombination mit der, vorzugsweise kakaomischungshaltigen, vorzugsweise festen, Umhüllung ein besonders attraktives Verzehrgefühl. Die vorliegende Lehre stellt daher ein sich durch seine besondere qualitative und quantitative Zusammensetzung auszeichnendes Verzehrprodukt bereit, das den Konsumenten durch seine spezielle Kombination der Rheologie seines Kernes und der Konsistenz seiner Ummantelung in besonders vorteilhafter Weise hinsichtlich Organoleptik und Optik anspricht. Die vorliegende Lehre stellt in bevorzugter Ausführungsform eine nicht nur durch die besondere qualitative Zusammensetzung, optional ausgezeichnet durch die Anwesenheit von Taurin und Koffein, bewirkte belebende Funktion bereit, sondern auch eine durch die spezielle Rheologie des Produktes unterstützte attraktive Organoleptik.

Erfindungsgemäß bevorzugt weist die erfindungsgemäß bevorzugt eingesetzte Stimulantienmischung allein die Komponenten Taurin und Koffein auf. In einer anderen Ausführungsform umfasst die erfindungsgemäß eingesetzte Stimulantienmischung im Wesentlichen Taurin und Koffein. In einer weiteren bevorzugten Ausführungsform besteht die erfindungsgemäße eingesetzte Stimulantienmischung im Wesentlichen aus Taurin und Koffein.

Erfindungsgemäß bevorzugt beträgt das Verhältnis (gewichtsbezogen) von Taurin zu Koffein im Lebensmittelprodukt, im Kern und/oder in der Stimulantienmischung > 1, insbesondere > 5, vorzugsweise 8 bis 14, vorzugsweise 12 bis 13, insbesondere 12,5. Besonders bevorzugt wird ein Gemisch aus Taurin und Koffein eingesetzt, das 12,5 Gewichtsanteile Taurin und 1 Anteil Koffein enthält, also ein Verhältnis von 12,5.

In einer besonders bevorzugten Ausführungsform beträgt der Anteil an Taurin und Koffein bezogen auf das Gesamtgewicht des Lebensmittelproduktes 0,2 bis 5,5 Gewichts-%, vorzugsweise 0,3 bis 4,0 Gewichts-%, vorzugsweise 0,35 bis 5,0 Gewichts-%, insbesondere 0,35 bis 3,0 Gewichts-% (jeweils bezogen auf Gesamtgewicht des Kerns und des Mantels).

In einer besonders bevorzugten Ausführungsform der vorliegenden Erfindung ist in dem Kern des erfindungsgemäßen Lebensmittelproduktes neben den Komponenten a), b) und c), oder in einer weiteren erfindungsgemäßen Ausführungsform neben den Komponenten a), b), c) und d), mindestens eine weitere Zusatzkomponente e) enthalten, nämlich mindestens einen Zusatzstoff. Dieser mindestens eine Zusatzstoff kann bevorzugt einer oder mehrere Stoffe sein, ausgewählt aus der Gruppe bestehend aus Alkohol, verkapseltem Brausepulver, Brausepulver, Milchpulver, Joghurtpulver, Aromastoffen, Mineralstoffen, Spurenelementen, Fruchtstücken, Farbstoffen, lebensmittelverträglichen Säuren, wie Zitronensäure, Konservierungsmitteln, Vitaminen, Füllstoffe, Geliermittel, Emulgatoren und Quellmitteln. In bevorzugter Ausführungsform kann der Zusatzstoff Alkohol, vorzugsweise ein Trinkalkohol, sein, insbesondere Ethanol. In bevorzugter Ausführungsform kann der Zusatzstoff ein in Kapseln oder Granulatform vorliegendes Brausepulver sein.

In bevorzugter Ausführungsform kann die Zusatzkomponente e) in dem Kern einer Menge von 0,01 vorzugsweise 0,1 bis 44, vorzugsweise von 0,1 bis 30, vorzugsweise 0,1 bis 20, vorzugsweise 0,1 bis 10 Gewichts-%, bevorzugt 1 bis 6 Gewichts-%, vorliegen (jeweils bezogen auf Gesamtgewicht des Kerns).

Es kann in einer bevorzugten Ausführungsform auch vorgesehen sein, dass die Komponenten a) bis c), oder in einer weiteren erfindungsgemäßen Ausführungsform des erfindungsgemäßen Lebensmittelproduktes die Komponenten a) bis d), die alleinigen Bestandteile des Kerns sind.

In einer besonders bevorzugten Ausführungsform betrifft die vorliegende Erfindung ein Lebensmittelprodukt, umfassend einen Mantel, enthaltend eine Kakaomischung und einen von dem Mantel zumindest teilweise umhüllten Kern, wobei der Kern in gelartiger Konsistenz vorliegt und einen Gehalt (jeweils bezogen auf Gesamtgewicht des Kerns) an a) einer Proteinkomponente von 2 bis 4 Gewichts-%, b) einer Kohlenhydratkomponente von 65 bis 82 Gewichts-%, c) Wasser von 10 bis 30 Gewichts-% und, d) einer Stimulantienmischung aus Taurin und Koffein von 0,35 bis 4 Gewichts-% aufweist. Bevorzugt sind in dem Kern keine weiteren Komponenten, insbesondere keine Zusatzstoffe und/oder Füllungen vorhanden. Bevorzugt kann allerdings auch vorgesehen sein, dass in dem Kern eine Zusatzkomponente e) vorhanden ist, vorzugsweise in einer Menge von 1 bis 6 Gewichts-%. In einer bevorzugten Ausführungsform können in dem Kern feste oder flüssige Füllungen vorhanden sein.

Im Zusammenhang mit der vorliegenden Erfindung wird unter einem Kohlenhydrat insbesondere ein Mono-, Di-, Oligo- oder Polysaccharid oder ein Zuckeralkohol, insbesondere ein Polyol verstanden. Vorzugsweise wird unter dem Begriff "Kohlenhydrat" ein Zucker, insbesondere ein Mono- oder Disaccharid, vorzugsweise Saccharose, Glucose oder Fructose verstanden.

Im Zusammenhang mit der vorliegenden Erfindung wird oder werden unter "organoleptisch" eine oder mehrere Eigenschaften eines Lebensmittelproduktes verstanden, das oder die auf die Sinnesorgane eines Konsumenten einwirken, insbesondere der Geschmack, das Aussehen, die Farbe oder der Geruch des Lebensmittelproduktes.

Im Zusammenhang mit der vorliegenden Erfindung wird unter einem Lebensmittelprodukt ein Produkt verstanden, das dem Zweck der menschlichen oder tierischen, vorzugsweise menschlichen Ernährung und des Genusses, vorzugsweise durch Aufnahme durch den Mund, dient. Im Zusammenhang mit der vorliegenden Erfindung sind Lebensmittel insbesondere Nahrungsmittel oder Genussmittel, bevorzugt Süßwaren. In besonders bevorzugter Ausführungsform liegen die Nahrungs- oder Genussmittel in fester Form, insbesondere in fester und räumlich definierter Form, vor, stellen also keine Getränke, Pulver, Pasten oder Cremes dar. Im Zusammenhang mit der vorliegenden Erfindung wird unter einer festen und räumlich definierten Form eine Form verstanden, gemäß der das diese räumlich definierte Form aufweisende Lebensmittelprodukt bei fachmännischer und bestimmungsgemäßer Handhabung seine definierte Form bis zum Verzehr nicht mehr ändert. In besonders bevorzugter Ausführungsform liegen die Lebensmittel, insbesondere Nahrungs- oder Genussmittel in Form von Tafeln, Stangen, Stäben, Scheiben und bevorzugt Riegeln, insbesondere Energieriegeln, Sportlerriegeln, Schokoladenriegeln oder Fitnessriegeln vor.

Im Zusammenhang mit der vorliegenden Erfindung wird unter Koffein 1-, 3-, 7-Trimethylxanthin, ggf. auch als Methyltheobromin, Teein oder Guaranin bezeichnet, verstanden.

Im Zusammenhang mit der vorliegenden Erfindung wird unter Taurin 2-Aminoethansulfonsäure ($C_2H_7NO_3S$) verstanden.

Im Zusammenhang mit der vorliegenden Erfindung wird unter einem Kern in gelartiger Konsistenz bevorzugt verstanden, dass der Kern als Gel vorliegt. Im Zusammenhang mit der vorliegenden Erfindung wird unter einen Gel ein feindisperses System aus mindestens einer festen und einer flüssigen Phase definiert und stellt vorzugsweise ein Kolloid dar. Im Zusammenhang mit der vorliegenden Erfindung ist ein Kern in gelartiger Konsistenz ein viskoelastischer Kern. Vorteilhafterweise und in bevorzugter Ausführungsform ist der Betrag des Speichermoduls des Kerns in gelartiger Konsistenz größer als der des Verlustmoduls, dass heißt dessen elastische Eigenschaft überwiegt dessen viskosen Eigenschaft. Im Zusammenhang mit der vorliegenden Erfindung wird unter dem Speichermodul die gespeicherte Spannung und unter dem Verlustmodul die Spannung, die dissipiert wird, verstanden.

Im Zusammenhang mit der vorliegenden Erfindung wird unter einer gelartigen Konsistenz bevorzugt eine schnittfeste Konsistenz verstanden. Im Zusammenhang mit der vorliegenden Erfindung ist eine gelartige Konsistenz bevorzugt eine Konsistenz, die überwiegend elastisches, vorzugsweise elastisches, Verhalten aufweist. Ein erfindungsgemäßer Kern ist bevorzugt nicht cremig.

Insbesondere wird unter einem Kern in gelartiger Konsistenz im Zusammenhang mit der vorliegenden Erfindung ein Kern in Gelform verstanden, insbesondere ein Kern mit einer Druckfestigkeit von 50 bis 4000 N/m$^2$, insbesondere 100 bis 3500 N/m$^2$, vorzugsweise 500 bis 3000 N/m$^2$, insbesondere 1000 bis 2500 N/m$^2$, vorzugsweise 2000 bis 2500 N/m$^2$, insbesondere 2300 bis 2400 N/m$^2$. Gemäß der Erfindung wird die Druckfestigkeit vorzugsweise bestimmt mittels des Texture-Analyser-Prüfgeräts TAXT2 mit 5 kg Maximallast. Für die Messung wird der Prüfkörper (Zylinder mit d= 12,5 mm) 4 mm in die Probe eingeführt und Kraft gemessen. Die Masse des Kerns weist erfindungsgemäß bevorzugt eine erhöhte Festigkeit auf. Durch die bevorzugt erhöhte Festigkeit des Gels resultiert eine gleichzeitige Stabilisierung des Mantels und ein sensorisch besserer Biss.

Sofern im Zusammenhang mit der vorliegenden Erfindung eine Zusammensetzung, ein Produkt oder eine Produktkomponente durch seine Zusammensetzung, insbesondere quantitativ in Form von relativen Gewichts- oder Mengenangaben für eine oder mehrere seiner Bestandteile, definiert ist, versteht sich, dass die Gesamtmenge oder -gewicht der betreffenden Bestandteile der Zusammensetzung, des Produktes oder der Produktkomponente auf 100 Gewichts-%, bezogen auf die Zusammensetzung, das Produkt oder auf die in Bezug genommene Komponente desselben aufaddieren.

In besonders bevorzugter Ausführungsform sieht die Erfindung vor, dass die Stimulantienkomponente, insbesondere die Stimulantienmischung, insbesondere die Stimulantienmischung aus Taurin und Koffein, allein im Kern vorhanden ist. In bevorzugter Ausführungsform liegt die Stimulantienkomponente, insbesondere die Stimulantienmischung, nicht in dem, vorzugsweise kakaohaltigen, Mantel vor.

In einer weiteren bevorzugten Ausführungsform ist vorgesehen, dass der Kern in gelartiger Konsistenz vorliegt und dass allein dieser Kern von dem erfindungsgemäß vorgesehenen Mantel umhüllt wird, insbesondere keine weiteren Elemente innerhalb des Mantels oder des Kerns vorliegen, insbesondere keine flüssigen Komponenten, insbesondere keine Füllung oder dergleichen im erfindungsgemäßen Lebensmittelprodukt vorhanden ist. In besonders bevorzugter Ausführungsform ist vorgesehen, dass der Kern eine einzige zusammenhängende Masse darstellt, insbesondere nicht kompartimentiert oder sonst wie sektioniert vorliegt. Demgemäß umfasst der das Lebensmittelprodukt nach außen abschließende Mantel in einer besonders bevorzugten Ausführungsform der vorliegenden Erfindung einen einzigen unkompartimentierten Kern.

In einer bevorzugten Ausführungsform der vorliegenden Erfindung kann die Proteinkomponente a) ein Protein oder mindestens ein Protein, zum Beispiel zwei, drei oder mehrere Proteine sein. In einer besonders bevorzugten Ausführungsform ist das Lebensmittelprodukt ein Lebensmittelprodukt, in dem die Proteinkomponente, insbesondere das Protein, Gelatine ist. In einer bevorzugten Ausführungsform ist die Proteinkomponente, insbesondere das Protein, ein Molkenprotein, insbesondere ein hochgelierendes Molkenprotein. In einer besonders bevorzugten Ausführungsform ist vorgesehen, dass in dem Kern als Proteinkomponente mindestens ein Protein, zum Beispiel also zwei, drei, vier oder mehr unterschiedliche Proteine vorhanden sind. In einer besonders bevorzugten Ausführungsform der Erfindung ist vorgesehen, dass in dem Kern als Proteinkomponente lediglich ein einziges Protein vorliegt, insbesondere Gelatine. Weitere Proteine neben Gelatine sind im Kern in einer bevorzugten Ausführungsform nicht vorhanden. In einer besonders bevorzugten Ausführungsform ist die eingesetzte Gelatine Schweinegelatine, insbesondere Knochen- oder Schwartengelatine. In einer weiteren bevorzugten Ausführungsform ist die eingesetzte Gelatine Rindergelatine. In einer weiteren bevorzugten Ausführungsform wird Gelatine mit einem Bloom-Wert von vorzugsweise 150 bis 300 Bloom, insbesondere 170 bis 290 Bloom, insbesondere 200 bis 280 Bloom und insbesondere 220 bis 260 Bloom eingesetzt.

In einer besonders bevorzugten Ausführungsform betrifft die vorliegende Erfindung ein Lebensmittelprodukt der genannten Art, wobei die Kohlenhydratkomponente b) ein Kohlenhydrat oder mindestens ein Kohlenhydrat, zum Beispiel zwei, drei oder mehrere Kohlenhydrate sein kann. In bevorzugter Ausführungsform werden in dem Kern zwei unterschiedliche Kohlenhydrate eingesetzt.

Die vorliegende Erfindung betrifft ein Lebensmittelprodukt, wobei die Kohlenhydratkomponente in Form einer kristallinen und einer nicht-kristallinen Kohlenhydratphase vorliegt.

In besonders bevorzugter Form betrifft die vorliegende Erfindung ein genanntes Lebensmittelprodukt, wobei die kristalline Kohlenhydratphase kristalline Saccharose, kristalline Glucose oder beides ist. In bevorzugter Ausführungsform ist die nicht-kristalline Kohlenhydratphase insbesondere ein Kohlenhydratsirup, insbesondere Glucosesirup, Invertzuckersirup, High Fructose Corn Sirup (HFCS) oder eine Mischung von zwei oder drei dieser Sirupe.

In einer besonders bevorzugten Ausführungsform wird die kristalline Kohlenhydratphase aus kristalliner Saccharose und kristalliner Glucose gebildet. In einer weiteren bevorzugten Ausführungsform wird die nicht-kristalline Kohlenhydratphase aus Glucosesirup gebildet. In einer weiteren bevorzugten Ausführungsform wird die Kohlenhydratkomponente b) aus einer kristallinen Kohlenhydratphase aus kristalliner Saccharose und kristalliner Glucose und einer nicht-kristallinen Kohlenhydratphase aus Glucosesirup aufgebaut, wobei die beiden Phasen bevorzugt miteinander vermischt sind.

In einer besonders bevorzugten Ausführungsform weist der Kern einen $a_w$-Wert (Wasseraktivität) von 0,6 bis 0,9, vorzugsweise 0,65 bis 0,85, insbesondere 0,70 bis 0,75 auf.

In einer weiteren bevorzugten Ausführungsform weist der Kern einen pH-Wert von 1,5 bis 6,0, vorzugsweise 2,0 bis 5,0, insbesondere 2,8 bis 3,5 auf.

In einer weiteren bevorzugten Ausführungsform ist das Lebensmittelprodukt ein Produkt, dessen Kern fettfrei ist.

In einer weiteren bevorzugten Ausführungsform weist das Lebensmittelprodukt einen Anteil von 20 bis 40 Gewichts-%, vorzugsweise 25 bis 35 Gewichts-%, bevorzugt 33 Gewichts-% Mantel und 60 bis 80 Gewichts-%, vorzugsweise 65 bis 75 Gewichts-%, bevorzugt 67 Gewichts-% Kern auf (jeweils bezogen auf Gesamtgewicht des Produktes).

In einer besonders bevorzugten Ausführungsform der vorliegenden Erfindung weist das Lebensmittelprodukt einen Anteil von 50 bis 95 Gewichts-% Mantel, insbesondere 40 bis 70 Gewichts-% Mantel, zu 50 bis 5 Gewichts-% Kern, insbesondere 60 zu 30 Gewichts-% Kern, (jeweils Gesamtgewicht Kern bzw. Mantel bezogen auf Gesamtgewicht des Produkts). In besonders bevorzugter Ausführungsform weist das Lebensmittelprodukt einen Anteil von 50 bis 70 Gewichts-%, vorzugsweise 60 bis 70 Gewichts-% Mantel und 50 bis 30 Gewichts-% Kern, vorzugsweise 40 bis 30 Gewichts-% Kern auf (jeweils Gesamtgewicht Kern bzw. Mantel bezogen auf Gesamtgewicht des Produktes).

In einer besonders bevorzugten Ausführungsform ist das erfindungsgemäße Lebensmittelprodukt durch ein Verhältnis von Durchmesser des Gels, also Kern, zu Manteldicke von (1,5 bis 3) :1 charakterisiert.

Die vorliegende Erfindung sieht vor, dass der Kern des Lebensmittelproduktes zumindest teilweise, vorzugsweise vollständig, von einem Mantel enthaltend eine, vorzugsweise bestehend aus einer, Fett- und Kohlenhydratmischung, insbesondere einer Kakaomischung, umhüllt ist. Vorzugsweise ist der Mantel fest, insbesondere bissfest.

Eine Fett- und Kohlenhydratmischung ist im Zusammenhang mit der vorliegenden Erfindung eine Mischung aus Fett und Kohlenhydraten, insbesondere Mono- und/oder Disaccharide, die zum Ausbilden eines festen Überzugs von Lebensmitteln dient, und optional Zusatzstoffe, z. B. Aromastoffe enthalten, aber auch ohne diese vorliegen kann.

In einer bevorzugten Ausführungsform kann vorgesehen sein, dass unter der Fett- und Kohlenhydratmischung eine Fettglasur verstanden wird, in bevorzugter Ausführungsform also eine Mischung aus Fetten und Kohlenhydraten, insbesondere Mono- oder Disacchariden, die sich zum Überzug von Lebensmittelprodukten eignet und in kakaohaltiger oder nicht-kakaohaltiger Form vorliegen kann. Im Falle einer nicht-kakaohaltigen Fettglasur wird die in der kakaohaltigen Fettglasur vorhandene Kakaokomponente durch pflanzliche Fette ersetzt.

Im Zusammenhang mit der vorliegenden Erfindung werden unter Kakaomischung insbesondere Schokolade und kakaohaltige Fettglasuren verstanden. Kakaohaltige Fettglasuren sind im Zusammenhang mit der vorliegenden Erfindung Zusammensetzungen, die neben Kohlenhydraten zwar eine kakaohaltige Komponente und Fett aufweisen, allerdings keine Kakaobutter enthalten. In einer besonders bevorzugten Ausführungsform ist die im Mantel enthaltene oder diese bildende Kakaomischung Schokolade.

Im Zusammenhang mit der vorliegenden Erfindung wird unter "Schokolade" eine kakaohaltige Zusammensetzung verstanden, die neben Kakao in Form von Kakaobutter oder in Form von Kakaobutter und Kakaomasse, ggf. auch in Form von Kakaopulver, Fett, Kohlenhydraten und optional Proteine enthält. Im Zusammenhang mit der vorliegenden Erfindung wird unter einer "Kuvertüre" eine insbesondere zum Glasieren zu verwendende, in der Regel mit einem höheren Fettanteil versehene, Schokolade verstanden. Im Zusammenhang mit der vorliegenden Erfindung werden unter Schokoladen insbesondere auch weiße Schokoladen, also Schokoladen, die als kakaohaltige Komponente lediglich Kakaobutter, nicht aber Kakaomasse oder Kakaopulver, aufweisen, ebenso wie Milchschokoladen, die neben der kakaohaltigen Komponente und Kohlenhydraten auch Milchkomponenten enthalten, und Bitterschokoladen, die neben der kakaohaltigen Komponente und Kohlenhydratenkomponente in der Regel keine Milchkomponenten aufweisen, verstanden.

In einer besonders bevorzugten Ausführungsform ist vorgesehen, dass das Lebensmittelprodukt im Kern, im Mantel oder in beiden, insbesondere in der Kakaomischung, zumindest einen Aromastoff aufweist. Im Zusammenhang mit der vorliegenden Erfindung wird unter einem Aromastoff auch ein Gewürz verstanden. In einer besonders bevorzugten Ausführungsform ist der mindestens eine Aromastoff ein Fruchtaroma, zum Beispiel Kirscharoma, Chili, Thymian, Pfeffer oder Zimt. Der Aromastoff kann auch ein Alkohol, insbesondere Trinkalkohol sein.

Gemäß einer weiteren bevorzugten Ausführungsform kann auch vorgesehen sein, dass im Kern, im Mantel oder in beiden mindestens ein Farbstoff vorhanden ist. In einer besonders bevorzugten Ausführungsform kann vorgesehen sein, dass der Mantel transparent und der Kern farbig ist, insbesondere schwarz, weiß, gelb, rot, grün oder blau. In einer weiteren bevorzugten Ausführungsform kann vorgesehen sein, dass der Mantel nicht transparent ist, beispielsweise schwarz, weiß, braun oder dunkelbraun, und der Kern transparent oder farbig ist, z. B. schwarz, weiß, gelb, rot, grün oder blau. In einer weiteren bevorzugten Ausführungsform kann vorgesehen sein, dass sowohl der Mantel als auch der Kern transparent sind. Beispielsweise kann in bevorzugter Ausführungsform der Mantel schwarz und der Kern weiß oder umgekehrt sein.

In besonders bevorzugter Ausführungsform betrifft die vorliegende Erfindung ein vorgenanntes Lebensmittelprodukt, wobei dieses im Kern 11 bis 50 Volumen-%, vorzugsweise 15 bis 50 Volumen -%, insbesondere 15 bis 45 Volumen -%, vorzugsweise 11 bis 40 Volumen -%, insbesondere 15 bis 35 Volumen -%, insbesondere 18 bis 30 Volumen -%, vorzugsweise 19 bis 25 Volumen -%, insbesondere 20 Volumen -% Gas (Volumen-% Gas in Bezug auf Gesamtvolumen des Kerns) enthält.

In besonders bevorzugter Ausführungsform kann das Gas in Form eines Gasgemischs, z. B. von Luft, insbesondere gereinigter Luft, oder Stickstoff vorliegen.

In besonders bevorzugter Ausführungsform stellt die vorliegende Erfindung daher ein Lebensmittelprodukt bereit, das sich durch einen definierten und gezielt eingebrachten Gehalt eines die spezifische Dichte des Kerns reduzierenden Gases auszeichnet und den Kern so aufschäumt. Die erfindungsgemäß besonders bevorzugte Ausführungsform, gemäß der der Kern einen bestimmten definiert eingebrachten Gasanteil enthält, führt zu einer besonders bevorzugten attraktiven Organoleptik des Lebensmittelproduktes, bewirkt eine besonders vorteilhafte Rheologie und Viskosität des Kerns und beeinflusst darüber hinaus auch in vorteilhafter Weise die Farbe des Kerns. Insbesondere bei Verwendung von Komponenten des Kerns, beispielsweise von Stimulantien wie Guarana, die in Abhängigkeit von ihrer Konzentration zu von Konsumenten ungewünschten Farbeffekten, insbesondere dunklen Farbeffekten, führen, kann die erfindungsgemäß bevorzugte Ausführungsform gemäß der ein bestimmter Gasgehalt im Kern vorgesehen ist, den Farbeffekt ändern, insbesondere zu einem helleren optischen Erscheinungsbild beitragen.

In erfindungsgemäß besonders bevorzugter Weise wird das Gas während des Herstellverfahrens des Kerns kontinuierlich oder batchweise in das den Kern ausbildende Gel eingebracht, insbesondere vor dessen Gelierung.

In einer besonders bevorzugten Ausführungsform weist das erfindungsgemäße Lebensmittelprodukt daher einen definierten Gasgehalt, insbesondere Luftgehalt, auf, der durch einen Gas-, insbesondere Lufteintragsverfahrensschritt im Rahmen des Herstellverfahrens bewirkt wurde.

Die Erfindung betrifft allerdings auch Lebensmittelprodukte, die ohne Zuhilfenahme eines zusätzlichen Gas-insbesondere Lufteintragsschrittes hergestellt wurden und demgemäß keinen zusätzlichen Gaseintrag und damit keinen zusätzlich eingebrachten, definierten Gasgehalt im Kern aufweisen. Der Gasanteil beträgt in derartigen Lebensmittelprodukten der vorliegenden Erfindung 0 bis 10 Vol.-% im Kern.

In besonders bevorzugter Ausführungsform beträgt die Dichte des Kerns, welcher durch definierten zusätzlichen Gaseintrag, dass heißt einen definierten erhöhten Gasgehalt, gekennzeichnet ist, von 0,8 bis 1,15 g/ml, insbesondere 0,9 bis 1,15 g/ml, insbesondere 1,0 bis 1,1 g/ml. In besonders bevorzugter Ausführungsform beträgt die Dichte des Kerns ohne zusätzlichen Gaseintrag von 1,2 bis 1,4 g/ml, insbesondere 1,25 bis 1,35 g/ml.

In besonders bevorzugter Ausführungsform liegt im einen erhöhten Gasgehalt aufweisenden Kern eine Gasblasengrößenverteilung, insbesondere Luftblasengrößenverteilung, mit einem d50-Wert von 50 bis 300 μm, vorzugsweise 100 bis 200 μm, insbesondere 150 bis 180 μm, vorzugsweise 170 μm vor.

Unter dem d50-Wert wird im Zusammenhang mit der vorliegenden Erfindung der Gasblasendurchmesser verstanden, bei dem 50 % des Volumens der Gasphase im Kern durch Gasblasen repräsentiert werden, die einen Durchmesser oberhalb des d50-Werts aufweisen und wobei 50 % des Volumens der Gasphase im Kern durch Gasblasen repräsentiert werden, die einen Durchmesser unterhalb des angegebenen d50-Werts aufweisen.

In besonders bevorzugter Ausführungsform ist vorgesehen, dass der Durchmesser der Gasblasen, insbesondere Luftblasen im einen erhöhten Gasgehalt aufweisenden Kern von 1 bis 800 μm, vorzugsweise 5 bis 600 μm, insbesondere 5 bis 400 μm beträgt.

In besonders bevorzugter Ausführungsform wird die Gas-, insbesondere Luftblasengrößenverteilung durch optische Auswertung über Mikroskopaufnahmen bestimmt. In besonders bevorzugter Ausführungsform wird der Gasanteil im Kern durch Dichteermittlung bestimmt.

Die vorliegende Erfindung betrifft auch ein Verfahren gemäß Anspruch 18.

Die vorliegende Erfindung betrifft auch ein Verfahren zur Herstellung eines Lebensmittelproduktes, umfassend einen Mantel, enthaltend eine Fett- und Kohlenhydratmischung, vorzugsweise eine Kakaomischung, und einen von dem Mantel zumindest teilweise umhüllten Kern in gelartiger Konsistenz, insbesondere zur Herstellung eines vorgenannten erfindungsgemäßen Lebensmittelproduktes, wobei das Verfahren die folgenden Verfahrensschritte, vorzugsweise in der angegebenen Reihenfolge, umfasst:

x) Bereitstellen eines vorgeformten Mantels aus einer Fett- und Kohlenhydratmischung, insbesondere einer Kakaomischung,

y) Bereitstellen einer flüssigen Zusammensetzung, vorzugsweise erhitzten oder erwärmten flüssigen Zusammensetzung, mit einem Gehalt (Gewicht der jeweils angegebenen Komponenten bezogen auf Gesamtgewicht der flüssigen Zusammensetzung) an

a) einer Proteinkomponente von 0,5 bis 10 Gewichts-%, insbesondere 3 bis 9 Gewichts-%, insbesondere 1 bis 5 Gewichts-%, bevorzugt 2 bis 4 Gewichts-%, vorzugsweise 2 bis 3 Gewichts-%,

b) einer Kohlenhydratkomponente von 65 bis 82 Gewichts-%,

c) Wasser von 10 bis 30 Gewichts-%, und

d) einer Stimulantienmischung aus Taurin und Koffein in einer Menge von 0,20 bis 8,0 Gewichts-%, insbesondere 0,5 bis 4,0 Gewichts-%, vorzugsweise 0,35 bis 4,0 Gewichts-% und,

z) Einfüllen der Zusammensetzung in den Mantel, Abkühlen und Verschließen desselben.

In bevorzugter Ausführungsform kann vorgesehen sein, dass in der flüssigen Zusammensetzung neben den Komponenten a) bis c) oder a) bis d) die Zusatzkomponente e) vorhanden ist.

In einer besonders bevorzugten Ausführungsform der vorliegenden Erfindung sieht das Verfahren demgemäß die vorgenannten Schritte x), y) und z) vor, wobei in Schritt y) die Komponenten a), b), c) und d) in Form eines flüssigen Gemischs, insbesondere erhitzten flüssigen Gemischs, bereitgestellt werden.

In einer besonders bevorzugten Ausführungsform der vorliegenden Erfindung ist vorgesehen, dass das in Verfahrensschritt y) bereitgestellte flüssige Gemisch der Komponenten a), b), c) und d), mit Gas, insbesondere einem Gasgemisch, vorzugsweise Luft oder Stickstoff, beaufschlagt wird, insbesondere so, dass ein Gaseintrag, insbesondere definierter Gaseintrag, erfolgt und die erhaltene flüssige Zusammensetzung einen Gasgehalt aufweist, der signifikant oberhalb eines diesen Lufteintragsschritt nicht durchführenden Verfahrens liegt. Dieser erfindungsgemäß bevorzugte Gaseintragsschritt kann im Rahmen des Verfahrensschrittes y) oder unmittelbar anschließend erfolgen. In besonders bevorzugter Ausführungsform wird der Gaseintragsschritt kontinuierlich oder diskontinuierlich durchgeführt. In besonders bevorzugter Ausführungsform wird der Gaseintragsschritt durch Eintragen von Gas, beispielsweise mittels eines Rotors, eines Rotors/Stators, einer Düse oder eines Düsensystems, oder mittels Einschlagen, beispielsweise mittels Impellers, Rotors oder eines Rührers, durchgeführt.

In besonders bevorzugter Ausführungsform sieht die vorliegende Erfindung ein Verfahren vor, gemäß dem in die gemäß Verfahrensschritt y) bereitgestellte flüssige Zusammensetzung Gas eingetragen wird, insbesondere in einer definierten Menge, insbesondere dergestalt, dass im Kern des erhaltenen Lebensmittelprodukts ein Gasgehalt von 1 bis 50 Volumen-%, vorzugsweise 5 bis 50 Volumen-%, insbesondere 5 bis 45 Volumen-%, vorzugsweise 10 bis 40 Volumen-%, insbesondere 15 bis 35 Volumen-%, insbesondere 18 bis 30 Volumen-%, vorzugsweise 19 bis 25 Volumen-%, insbesondere 20 Volumen-% Gas (jeweils Volumen-% Gas in Bezug auf Gesamtvolumen des Kerns) vorliegt.

Erfindungsgemäß kann auch vorgesehen sein, die Reihenfolge der Verfahrensschritte x) und y) zu tauschen. In Schritt z) ist in bevorzugter Ausführungsform insbesondere vorgesehen, den Mantel erst nach Abkühlen der eingefüllten, flüssigen Zusammensetzung zu verschließen. Während des Abkühlvorgangs wird die flüssige Konsistenz des Kerns kontrolliert in eine gelartige Konsistenz überführt.

In besonders bevorzugter Ausführungsform ist vorgesehen, dass Schritt y) durchgeführt wird, indem in einem Schritt y1) die Proteinkomponente in Wasser unter Erhitzung, vorzugsweise bei einer Temperatur von 50 bis 110°C, insbesondere 50 bis 60°C, bevorzugt 60°C, gelöst, in einem gleichzeitig oder sukzessive erfolgenden Schritt y2) die Kohlenhydratkomponente, optional vorliegende Zusatzstoffe und die optional vorliegende Stimulantienmischung, vorzugsweise bei einer Temperatur von 60 bis 110°C, insbesondere 75 bis 95°C, insbesondere 90°C, unter Erhitzung und Wasserzugabe gemischt und in einem Schritt y3) die Proteinkomponenten-haltige Lösung gemäß y1) mit der in Schritt y2) erhaltenen, vorzugsweise Stimulantien-haltigen, Lösung gemischt und, optional, anschließend abgekühlt wird, vorzugsweise auf eine Temperatur von 20 bis 40 °C, insbesondere 30 bis 35°C, bevorzugt 32°C.

In einer besonders bevorzugten Ausführungsform der vorliegenden Erfindung wird in Schritt y1) die Proteinkomponente, vorzugsweise Gelatine, zunächst mit Wasser bei einer Temperatur von 5 bis 30°C, vorzugsweise 10 bis 25°C, insbesondere 20°C, gemischt, vorzugsweise für eine Misch- und Quellzeit von 10 bis 90 Minuten, vorzugsweise 15 bis 60 Minuten, bevorzugt 20 Minuten.

Anschließend erfolgt in diesem Schritt y1) in bevorzugter Ausführungsform eine Erhitzung der mit Wasser gemischten Proteinkomponente auf 50 bis 110°C, vorzugsweise 55 bis 80°C, bevorzugt 60°C, wobei die Lösung vorzugsweise für einen Zeitraum von 1 bis 60 Minuten, vorzugsweise 3 bis 30 Minuten, bevorzugt 5 Minuten bei dieser Temperatur gehalten wird.

In einer weiteren bevorzugten Ausführungsform ist vorgesehen, dass die gemischte und erwärmte, vorzugsweise Stimulantien-haltige, Lösung gemäß Schritt y2) anschließend für einen Zeitraum von 1 bis 120 Minuten, vorzugsweise 10 bis 120 Minuten gehalten wird oder vorzugsweise unmittelbar in dem Verfahren eingesetzt wird.

In einer weiteren bevorzugten Ausführungsform ist vorgesehen, dass die Proteinkomponenten-haltige Lösung gemäß Schritt y1) und die, vorzugsweise Stimulantien-haltige, Lösung gemäß Schritt y2) in bevorzugter Ausführungsform für einen Zeitraum von 5 bis 60 Minuten, vorzugsweise 10 bis 50 Minuten, insbesondere 10 Minuten miteinander gemischt werden.

In einer weiteren bevorzugten Ausführungsform ist vorgesehen, dass die erfindungsgemäß hergestellte flüssige Kernzusammensetzung in Schritt z) mit einer Temperatur von 20 bis 40°C, vorzugsweise 22 bis 38°C, insbesondere 32°C in den Mantel aus fett- und kohlenhydrathaltigem Material, insbesondere kakaohaltigem Material, eingebracht wird. In besonders bevorzugter Ausführungsform kann anschließend eine Kühlphase und gegebenenfalls, besonders bevorzugt, eine Ruhephase vorgesehen sein. In besonders bevorzugter Ausführungsform wird die Kühlphase bei einer Temperatur von 15 bis 25°C, vorzugsweise 20°C durchgeführt. In einer weiteren bevorzugten Ausführungsform wird die sich anschließende Ruhephase für einen Zeitraum von 1 bis 10 Stunden, vorzugsweise 2 bis 6 Stunden, insbesondere für 300 Minuten durchgeführt.

In einer weiteren alternativen Ausführungsform kann anstelle der Kühl- und anschließenden Ruhephase auch eine Gefrier- und anschließende Ruhephase durchgeführt wird. In dieser bevorzugten Ausführungsform wird eine Gefrierphase bei Temperaturen von -15 bis 0°C, vorzugsweise -10 bis -3°C, insbesondere -4°C durchgeführt. In bevorzugter Ausführungsform kann die sich anschließende Ruhephase für einen Zeitraum von 1 bis 60 Minuten, vorzugsweise 1 bis 30 Minuten, insbesondere 1 Minute durchgeführt werden.

In einer weiteren bevorzugten Ausführungsform ist vorgesehen, dass nach Abkühlen der in den Mantel eingebrachten Kernzusammensetzung, vorzugsweise nach Ausbilden der erforderlichen gelartigen Konsistenz, der gefüllte vorgeformte Mantel verschlossen wird, beispielsweise mit Schokolade- oder Fettglasur. In einer besonders bevorzugten Ausführungsform wird dabei der verschließende Deckel oder Boden bei einer Temperatur von 34 bis 60°C, vorzugsweise 35 bis 50°C, insbesondere 38°C aufgegossen.

In einer besonders bevorzugten Ausführungsform der vorliegenden Erfindung betrifft diese auch ein Lebensmittelprodukt, bevorzugt einen Riegel, z. B. Energieriegel, Riegel mit belebender Füllung oder Kinderriegel, insbesondere der vorstehend definierten Zusammensetzung und Art, wobei dieses vorzugsweise herstellbar, insbesondere hergestellt ist, nach einem der Verfahren der vorliegenden Erfindung.

Weitere bevorzugte Ausführungsformen der vorliegenden Erfindung ergeben sich aus den Unteransprüchen.

Die Erfindung wird im Folgenden anhand der Beispiele und der dazugehörigen Figur näher erläutert.

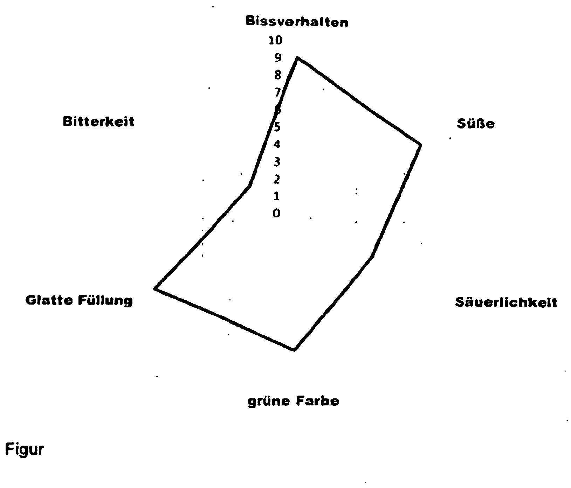

Die Figur zeigt grafisch in Form eines Spiderweb-Auswertediagramms das Ergebnis eines Verkostungsexperiments eines Riegels mit belebender Füllung.

Beispiel 1 - Energieriegel mit Taurin und Koffein

Rezeptur

Tabelle 1

| Komponente |
| --- |
| Saccharose, kristallin |
| Wasser |
| Glucose, kristallin |
| Glukosesirup |
| Stimulantienmischung (Koffein, Taurin) gemäß Tabelle 2 |
| Zusatzkomponenten gemäß Tabelle 2 |
| Gelatine, 200 Bloom |
| Zitronensäure |
| Aroma |
| Tri - Natriumcitrat |
| Farbstoff |
| Gesamt |

Rezeptur einer Mischung enthaltend die Stimulantienmischung (Taurin und Koffein) und Zusatzkomponenten

Tabelle 2, Zusammenfassung aus der Stimulantienmischung und den Zusatzkomponenten

| Komponente | % |
| --- | --- |
| Taurin | 55,25 |
| Koffein (anhydr.) | 4,42 |
| Vitamin B6 (Pyridoxinhydrochlorid) | 0,28 |
| Vitamin B12 (Cyanocobalamin 0,1 %) | 0,00028 |
| Niacin (Nicotinamid) | 1,10 |
| Pantothensäure (als Calcium-D-pantothenat) | 0,28 |
| Glucuronolacton | 33,15 |
| Inositol (NF12) | 2,76 |
| Glucose, Monohydrat | 2,76 |
| Gesamt | 100 |

Beispiel 2 - Riegel mit belebender Füllung enthaltend Guarana

Rezeptur:

Tabelle 3

| Rohstoff |
| --- |
| Saccharose |
| Wasser |
| Glucose, kristallin |
| Glukosesirup |
| Guarana Extract |
| Gelatine 210 Bloom |
| Zitronensäure |
| Aroma |
| Tri-Natriumcitrat |
| Farbstoff |
| Gesamt |

Gelatinemasse:

Abweichend zu Rezeptur Beispiel 1 wird in Rezeptur Beispiel 2 die geteilte Wasserphase gleich zu Beginn verwendet, um das Guarana zu dispergieren. Nach gleichmäßiger Verteilung des Guaranas wird die Gelatine zur Quellung zugegeben. Anschließend erfolgt die Erwärmung auf eine Temperatur im Bereich 58 bis 62° C.

Zuckermasse:

Zucker, Rest Wasserphase, Dextrose und Glukosesirup werden auf eine Temperatur im Bereich 86 bis 92° C erhitzt. Dann wird die Masse für eine Zeit von 2 bis 4 Min. auf der Temperatur gehalten, bis alle Zuckerkristalle optisch gelöst erscheinen.
Danach erfolgt die Zugabe der restlichen Zutaten (bis auf das Aroma) und die Abkühlung auf eine Temperatur im Bereich 73 bis 78° C. Bei Erreichen dieser Temperatur Zugabe des Aromas und weiteres Kühlen auf eine Temperatur im Bereich 30 bis 35° C; dann Lufteinschlag, Abfüllung bei einer Temperatur im Bereich 30 bis 33° C.

Beispiel 3 - Herstellungsverfahren für den Kern auf der Basis der Rezeptur gemäß Beispiel 1 (prozentuale Angaben bezogen auf Gesamtrezeptur):

- 1 Teil Gelatine mit 3 Teilen Wasser im Becherglas 1 für 15 bis 25 Min. quellen lassen und danach auf eine Temperatur im Bereich 58 bis 62° C erhitzen.

- 2 Teile Wasser in Becherglas 2 geben.

- 5 Teile Glukosesirup in Becherglas 2 geben.

- 12 Teile Saccharose, 2 Teile Glucose (kristallin), Koffein- und Taurin-haltige Mischung aus Tabelle 2, 0,9 bis 1,3 % Zitronensäure, 0,05 bis 0,3 % Tri-Natriumcitrat, 0,005 bis 0,02 % Farbstoff und 0,6 bis 1,0 % Aroma in Becherglas 2 geben.

- Den gesamten Ansatz im Becherglas 2 auf eine Temperatur im Bereich 83-88 °C erhitzen.

- Die temperierte Gelatine dazugeben.

- Endtemperatur der Füllung: 75-81 °C.

Alternativ kann die Gelatine mit Wasser unter Zuhilfenahme eines Rührers verteilt, 18 bis 24 Min. quellen gelassen und dann auf eine Temperatur im Bereich 58 bis 62° C erhitzt werden. Die weiteren Inhaltsstoffe des Kerns werden gemischt, unter Rühren gelöst und dabei erhitzt. Anschließend wird die auf eine Temperatur im Bereich 58 bis 62° C erhitzte Gelatine-Lösung zugegeben und nach Abkühlung auf eine Temperatur im Bereich 29 bis 32° C abgefüllt.

Herstellung des Mantels und des verzehrfertigen Riegels:

Der Schokoladenmantel wird aus handelsüblicher Kuvertüre, optional mit Zugabe von Aroma, oder aus Schokolade hergestellt.

Eine Kunststoffform wurde mit der Schokolade teilausgegossen und ein Hohlkörper (Mantel für die Füllung) geformt, dann wurde die Schokolade nach einem Kühlvorgang mit der Energie-Riegel Füllung, vorstehend, gefüllt. Die Füllung hatte dabei eine Temperatur eine Temperatur im Bereich 29 bis 34° C.

Anschließend wurde die gefüllte Hohlkörperform für 1 bis 4 Stunden in einem Kühlraum bei einer Temperatur von 3 bis 7° C zwischengelagert.

Nach einer Stunde wurde die Form wieder entnommen. Die Füllung war mittlerweile abgekühlt und hatte eine leicht gelierte Oberfläche gebildet. Auf diese wurde nun ein Schokoladenboden aufgebracht. Durch die geringe Temperatur der Füllung härtete die Schokolade sofort aus.

Die hergestellten Riegel wiesen folgende Gewichtsanteile auf:

1 Teil Relief-Hohlkörper mit Boden und 2 Teile Füllung.

Es wurden rheologische Messungen an den gelartigen Kernen der hergestellten Energieriegel durchgeführt. (Prüfgerät Oszillationsrheometer AR 2000, Platte/Platte-System, Messspalt 3300 $\mu$m, Drehmoment 1000 $\mu$Nm, Frequenzbereich 0,1 bis 10 Hz, d = 5 cm). Die Ergebnisse zeigen, dass im niedrigen Frequenzbereich der Speichermodul deutlich größer als der Verlustmodul ist, bei 0,1 Hz 2000 Pa für den Speichermodul und 550 Pa für den Verlustmodul.

Die hergestellten Energieriegel zeichneten sich durch eine attraktive Organoleptik, eine stimulierende Wirkung und eine gute Haltbarkeit aus. Die hergestellten Energieriegel wiesen insbesondere einen geringen $a_w$-Wert (Wasseraktivität) und einen geringen pH-Wert auf (bezogen auf die Füllung $a_w$-Wert = 0,72, pH-Wert = 0,32). Sie wiesen eine erhöhte Lagerstabilität bei Raumtemperatur auf, zeichneten sich durch eine wünschenswerte Festigkeit der Füllung und eine gleichzeitige Stabilisierung des Mantels sowie eine hohe Stabilität im unbewegten Zustand aus. Die hergestellten Produkte waren nicht klebrig, zogen keine Fäden, zeigten kein Herauslaufen der Füllung und sind in attraktiver Weise besonders bissfähig.

Die Ergebnisse physikalischer Analytik zeigten eine Gefrierpunkterniedrigung mit T = -48,0°C, einen Anteil an freiem Wasser von 2,66 g/100g Wasser und eine Adhäsion von 5,01 kPa $\pm$ 0,76 kPa (Textureanalyzer TAXT2, für die Messung wird der Prüfkörper (Stempel mit d= 12,5 mm) mit einer Vorkraft von 0,5 N auf die Oberfläche gepresst und anschließend die Kraft beim Abziehen gemessen).

Farbmessung Messung im L, a*, b* Spektrum (Minolta Spectrophotometer CM-600d)

L-Wert: 23,67, a*-Wert 0,08, b*-Wert 0,82

Beispiel 4 - Analytische Sensorik-Prüfung

Die vorliegende sensorische Analyse dient dem Ziel, die intrinsischen Produkteigenschaften (Aussehen, Geruch, Geschmack und Textur) zu analysieren. Somit wird der Zusammenhang zwischen den physikalisch/chemischen Bestandteilen des Produkts und den daraus resultierenden sensorischen Eigenschaften und deren Wahrnehmung durch die Testpersonen dokumentiert.

Ausgewählt wurde die Profilprüfung mit Intervallskala nach der amtlichen Sammlung von Untersuchungsverfahren nach § 65 LFGB 00.90 11/1 sensorische Prüfverfahren - Profilprüfung Teil 1: Konventionelles Profil, Mai 2002 (Übernahme der gleichnamigen Deutschen Norm DIN 10967 Teil 1 Ausgabe Oktober 1999. Das Ablaufschema des Prüfverfahrens wurde gemäß den Untersuchungsverfahren (Profilprüfung Teil 1) durchgeführt. Die statistische Auswertung der Merkmalseigenschaften erfolgte durch Mittelwerte und Standardabweichung. Die Ergebnisse wurden graphisch als Plygone ("spiderweb") dargestellt. Alle in der Norm enthalten Verweise und Festlegungen (insbesondere weitere DIN- Normen) wurden eingehalten und berücksichtigt.

Die Norm legt ein Verfahren zur Analyse der Ausprägung (Intensität) produktrelevanter Merkmalseigenschaften fest. Dabei werden die Merkmaleigenschaften (z. B. Farbe, Geruch, Geschmack, Konsistenz) getrennt in der Reihenfolge ihrer Wahrnehmung erfasst und die Intensität jeder Merkmalseigenschaft anhand einer vorgegebenen Intensitätsskale bestimmt.

Prüfer können nur Personen sein, die entsprechend der ISO Normen (ISO Norm 8586.1-1993, 8586.2-2008 und 11035-1994) eine festgelegte Schulung erhalten haben und über ein umfangreiches Wissen zur sprachlichen Benennung von Merkmalseigenschaften verfügen, um eine verständliche Beschreibungen des Produktes zu erstellen. Zur Erstellung des speziellen Produktprofils wurde das gesamte Prozedere der Findung von geeigneten Begriffen (Merkmalseigenschaften) durchgeführt (siehe angegebene Norm), die das Produkt eindeutig beschreiben, d.h. alle relevanten Begriffe wurden in einer Sammlung aufgelistet und entsprechend ihrer Aussagekraft bewertet. Daraufhin erfolgte eine Eliminierung von Doppelbedeutungen, hedonischen und unpräzisen Begriffen etc.. Die endgültige Anzahl der Begriffe, die die charakteristischen Eigenschaften des Produktes dokumentieren, wurde auf 6 Merkmale festgelegt: knackiges Bissverhalten des Außenmantel, bitterer Geschmackeindruck, intensive Grünfärbung der Füllung, Süße, Säuerlichkeit und glatte Gelkonsistenz der Füllung. Somit lag eine geeignete Terminologie aller beschreibenden Merkmale vor und ein definierter Prüfauftrag konnte formuliert werden. An der Prüfung nahmen 10 geschulte Prüfer teil. Die Prüfung erfolgte als Einzelprüfung. Jeder Prüfer prüfte unabhängig die Intensität der vorgegebenen Merkmalseigenschaften in der Reihenfolge ihres Auftretens und trug die Ergebnisse in das nachstehende Prüfformular ein.

Den Prüfern wurde der Riegel mit belebender Füllung gemäß der Rezeptur aus Beispiel 2 zur Verkostung vorgesetzt.

Die sensorische Prüfung wurde mit Intervallskalen (strukturierte Linie) durchgeführt. Die unstrukturierte Linie weist eine Länge von 10 cm auf. Der Anfang und das Ende (sogenannte Ankerpunkte) der Linie wird durch die positiven oder negativen Merkmalseigenschaften beschrieben (z. B. von rauh nach sehr glatt). Anschließend werden von den Prüfern die wahrgenommenen Intensitäten der Begriffe (Merkmale) auf die Skalen übertragen. Dazu markiert jeder Prüfer sein Prüfergebnis (individuelle Wahrnehmung) an der entsprechenden Stelle zwischen beiden Ankerpunkten direkt auf der Linie. Die Auswertung erfolgt als arithmetische Mittelwertbestimmung mit Standardabweichung.

Arithmetische Mittelwertbestimmung:

$$\overline{x} = \frac{1}{n}\sum_{i=1}^{n} x_i$$

Standardabweichung:

$$sx = \sqrt{\frac{1}{n-1}\left(\sum_i \left(x_i - \overline{x}\right)^2\right)} = \sqrt{\frac{1}{n-1}\left(\sum_i x_i^2 - n\overline{x}^2\right)}$$

**Prüfbogen**

Intervallskale

Profilprüfung

Datum:        Prüfer:

Prüfmuster: Riegel

Prüfaufgabe: Markieren Sie bitte durch einen senkrechten Strich auf den Intensitätsskalen die Ausprägung der Merkmalseigenschaften 1-6 des Prüfmusters.

Merkmalseigenschaft 1: Knackiges Bissverhalten des Außenmantels

weiches Bissverhalten        sehr knackige Bissverhalten

Merkmalseigenschaft 2: Bitterer Geschmackeindruck

leicht bitter        sehr bitter

Merkmalseigenschaft 3: Intensive Grünfärbung der Füllung

blass grün        sehr intensives grün

Merkmalseigenschaft 4: Süße

geringe Süße        sehr ausgeprägte Süße

Merkmalseigenschaft 5: Säuerlichkeit

geringe Säuerlichkeit        sehr ausgeprägte Säuerlichkeit

Merkmalseigenschaft 6: Glatte Gelkonsistenz der Füllung

leicht raue Gelkonsistenz        sehr glatte Gelkonsistenz

Die Ergebnisse sind in der Figur dargestellt. Das erfindungsgemäße Produkt zeichnet sich durch ein sehr gutes Bissverhalten, eine vorteilhafte hohe Süße, eine angenehme Säuerlichkeit und eine als glatt empfundene Füllung aus, wobei gleichzeitig nur ein geringes Maß an Bitterkeit auftrat.

**Patentansprüche**

1.    Lebensmittelprodukt, umfassend einen Mantel, enthaltend eine Fett- und Kohlenhydratmischung, und einen von dem Mantel zumindest teilweise umhüllten Kern, wobei der Kern in gelartiger Konsistenz vorliegt und einen Gehalt (jeweils bezogen auf Gesamtgewicht des Kerns) an

a) einer Proteinkomponente von 0,5 bis 10 Gewichts-%,
b) einer in Form einer kristallinen und einer nicht-kristallinen Kohlenhydratphase vorliegenden Kohlenhydratkomponente von 65 bis 82 Gewichts-%, und
c) Wasser von 10 bis 30 Gewichts-%

aufweist, und wobei das Lebensmittelprodukt 11 bis 50 Volumen-% Gas im Kern aufweist (Gasvolumen bezogen auf Volumen des Kerns).

2. Lebensmittelprodukt, umfassend einen Mantel, enthaltend eine Fett- und Kohlenhydratmischung, und einen von dem Mantel zumindest teilweise umhüllten Kern, wobei der Kern in gelartiger Konsistenz vorliegt und einen Gehalt (jeweils bezogen auf Gesamtgewicht des Kerns) an

a) einer Proteinkomponente von 0,5 bis 10 Gewichts-%,
b) einer in Form einer kristallinen und einer nicht-kristallinen Kohlenhydratphase vorliegenden Kohlenhydratkomponente von 65 bis 82 Gewichts-%,
c) Wasser von 10 bis 30 Gewichts-% und
d) einer Stimulantienmischung aus Taurin und Koffein von 0,20 bis 8,0 Gew.-% aufweist.

3. Lebensmittelprodukt nach Anspruch 2, wobei dieses 11 bis 50 Volumen-% Gas im Kern aufweist (gasvolumen bezogen auf Volumen des Kerns).

4. Lebensmittelprodukt nach Anspruch 1, wobei dieses im Kern 0,20 bis 8,0 Gewichts-% einer koffeinhaltigen Stimulantienkomponente aufweist.

5. Lebensmittelprodukt nach Anspruch 4, wobei die koffeinhaltige Stimulantienkomponente Taurin und Koffein enthält.

6. Lebensmittelprodukt nach Anspruch 4, wobei die koffeinhaltige Stimulantienkomponente Guarana ist.

7. Lebensmittelprodukt nach einem der vorhergehenden Ansprüche, wobei die Fett- und Kohlenhydratmischung eine Kakaomischung ist.

8. Lebensmittelprodukt nach einem der vorhergehenden Ansprüche, wobei die kristalline Kohlenhydratphase Saccharose, Glucose, Isomaltulose oder eine Kombination davon und die nicht-kristalline Kohlenhydratphase Glucosesirup aufweist.

9. Lebensmittelprodukt nach einem der vorhergehenden Ansprüche, wobei die Proteinkomponente Gelatine ist.

10. Lebensmittelprodukt nach einem der vorhergehenden Ansprüche, wobei der Kern fettfrei ist.

11. Lebensmittelprodukt nach einem der vorhergehenden Ansprüche, wobei das Lebensmittelprodukt einen Anteil von 50 bis 95 Gewichts-% Mantel und 50 bis 5 Gewichts-% Kern aufweist (jeweils bezogen auf Gesamtgewicht des Produkts).

12. Lebensmittelprodukt nach einem der vorhergehenden Ansprüche, wobei die Kakaomischung Schokolade ist.

13. Lebensmittelprodukt nach einem der vorhergehenden Ansprüche, wobei der Kern mindestens einen Zusatzstoff aufweist.

14. Lebensmittelprodukt nach einem der vorhergehenden Ansprüche, wobei der Kern, der Mantel oder beides mindestens einen Aromastoff aufweist.

15. Verfahren zur Herstellung eines Lebensmittelproduktes, umfassend einen Mantel, enthaltend eine Fett- und Kohlenhydratmischung, insbesondere eine Kakaomischung, und einen von dem Mantel zumindest teilweise umhüllten Kern in gelartiger Konsistenz, insbesondere nach einem der Ansprüche 2 und 7 bis 14, umfassend das

x) Bereitstellen eines vorgeformten Mantels aus einer Fett- und Kohlenhydratmischung, insbesondere einer Kakaomischung,
y) Bereitstellen einer flüssigen Zusammensetzung mit einem Gehalt (jeweils bezogen auf Gesamtgewicht der Zusammensetzung) an

a) einer Proteinkomponente von 0,5 bis 10 Gewichts-%,
b) einer Kohlenhydratkomponente von 65 bis 82 Gewichts-% und
c) Wasser von 10 bis 30 Gewichts-%, und
d) einer Stimulantienmischung aus Taurin und Koffein von 0,20 bis 8,0 Gew.-% und

z) Einfüllen der flüssigen Zusammensetzung in den Mantel, Abkühlen und Verschließen desselben.

**16.** Verfahren nach Anspruch 15, wobei Schritt y) durchgeführt wird, indem in einem Schritt y1) die Proteinkomponente im Wasser gelöst, in einem Schritt y2) die Kohlenhydratkomponente, optional vorhandene Zusatzstoffe und die Stimulantienkomponente unter Erhitzung gemischt, gelöst und in einem Schritt y3) die Proteinkomponenten-haltige Lösung gemäß Schritt y1) mit der Stimulantienhaltigen Lösung gemäß Schritt y2) gemischt wird.

**17.** Verfahren nach Anspruch 15 oder 16, wobei in die flüssige Zusammensetzung gemäß Verfahrensschritt y) Gas so eingetragen wird, dass der Kern des erhaltenen Lebensmittelprodukts einen Gasgehalt von 11 bis 50 Volumen-% (Volumen-% Gas in Bezug auf Gesamtvolumen des Kerns) enthält.

**18.** Verfahren zur Herstellung eines Lebensmittelproduktes, umfassend einen Mantel, enthaltend eine Fett- und Kohlenhydratmischung, insbesondere eine Kakaomischung, und einen von dem Mantel zumindest teilweise umhüllten Kern in gelartiger Konsistenz, insbesondere nach einem der Ansprüche 1 und 4 bis 14, umfassend das

x) Bereitstellen eines vorgeformten Mantels aus einer Fett- und Kohlenhydratmischung, insbesondere einer Kakaomischung,
y) Bereitstellen einer flüssigen Zusammensetzung mit einem Gehalt (jeweils bezogen auf Gesamtgewicht der Zusammensetzung) an

a) einer Proteinkomponente von 0,5 bis 10 Gewichts-%,
b) einer Kohlenhydratkomponente von 65 bis 82 Gewichts-% und
c) Wasser von 10 bis 30 Gewichts-% und

z) Einfüllen der flüssigen Zusammensetzung in den Mantel, Abkühlen und Verschließen desselben,

wobei in die flüssige Zusammensetzung gemäß Verfahrensschritt y) Gas so eingetragen wird, dass der Kern des erhaltenen Lebensmittelproduktes einen Gasgehalt von 11 bis 50 Vol.-% (Vol.-% Gas in Bezug auf Gesamtvolumen des Kerns) enthält.

**19.** Verfahren nach Anspruch 18, wobei Schritt y) durchgeführt wird, indem in einem Schritt y1) die Proteinkomponente im Wasser gelöst, in einem Schritt y2) die Kohlenhydratkomponente, optional vorhandene Zusatzstoffe und die optional vorhandene Stimulantienkomponente unter Erhitzung gemischt, gelöst und in einem Schritt y3) die Proteinkomponenten-haltige Lösung gemäß Schritt y1) mit der Stimulantien-haltigen Lösung gemäß Schritt y2) gemischt wird.

**Claims**

**1.** A nutritional product comprising a shell containing a fat-and-carbohydrate mixture, and a core that is at least partially covered by the shell, wherein the core exists in a gel-like consistency and comprises an amount (each based on the total weight of the core) of

a) a protein component of 0.5 to 10 wt-%,
b) a carbohydrate component of 65 to 82 wt-% in the form of a crystalline and a non-crystalline carbohydrate phase, and
c) water from 10 to 30 wt-%,

and wherein the nutritional product comprises 11 to 50 volume-% gas in the core (the gas volume is based on the volume of the core).

2. A nutritional product comprising a shell containing a fat-and-carbohydrate mixture, and a core that is at least partially covered by the shell, wherein the core exists in a gel-like consistency and comprises an amount (each based on the total weight of the core) of

a) a protein component of 0.5 to 10 wt-%,
b) a carbohydrate component of 65 to 82 wt-% in the form of a crystalline and a non-crystalline carbohydrate phase,
c) water from 10 to 30 wt-%, and
d) a stimulant mixture of taurine and caffeine of 0.20 to 8.0 wt-%.

3. The nutritional product according to claim 2, wherein said product comprises 11 to 50 volume-% gas in the core (the gas volume is based on the volume of the core).

4. The nutritional product according to claim 1, wherein said product comprises 0.20 to 8.0 wt-% of a caffeine-containing stimulant component in the core.

5. The nutritional product according to claim 4, wherein the caffeine-containing stimulant component comprises taurine and caffeine.

6. The nutritional product according to claim 4, wherein the caffeine-containing stimulant component is guarana.

7. The nutritional product according to one of the previous claims, wherein the fat-and-carbohydrate mixture is a cocoa mixture.

8. The nutritional product according to one of the previous claims, wherein the crystalline carbohydrate phase comprises sucrose, glucose, isomaltulose or a combination thereof and the non-crystalline carbohydrate phase comprises glucose syrup.

9. The nutritional product according to one of the previous claims, wherein the protein component is gelatin.

10. The nutritional product according to one of the previous claims, wherein the core is fat free.

11. The nutritional product according to one of the previous claims, wherein the nutritional product has a fraction of 50 to 95 wt-% shell and 50 to 5 wt-% core (each of which is based on the total weight of the product).

12. The nutritional product according to one of the previous claims, wherein the cocoa mixture is chocolate.

13. The nutritional product according to one of the previous claims, wherein the core comprises at least one additive.

14. The nutritional product according to one of the previous claims, wherein the core, the shell or both comprise at least one flavouring.

15. A method for producing a nutritional product comprising a shell containing a fat-and-carbohydrate mixture, in particular a cocoa mixture, and a core which is at least partially covered by the shell, said core being of a gel-like consistency, in particular according to one of claims 2 and 7 to 14, comprising

x) preparing a pre-formed shell of a fat-and-carbohydrate mixture, in particular a cocoa mixture,
y) preparing a liquid composition with an amount (each based on the total weight of the composition) of

a) a protein component of 0.5 to 10 wt-%,
b) a carbohydrate component of 65 to 82 wt-%, and
c) water of 10 to 30 wt-%, and
d) a stimulant mixture of taurine and caffeine of 0.20 to 8.0 wt-%, and

z) filling the liquid composition into the shell, cooling and sealing the same.

**16.** The method according to claim 15, wherein step y) is carried out through dissolving the protein component in water in a step y1), mixing and dissolving the carbohydrate component, the optional additives and the stimulant component in a step y2) with heating, and mixing the protein component-containing solution according to step y1) with the stimulant-containing solution according to step y2) in a step y3).

**17.** The method according to claim 15 or 16, wherein gas is added to the liquid composition according to process step y) in such a way that the core of the nutritional product obtained has a gas content of 11 to 50 volume-% (volume-% of the gas is based on the total volume of the core).

**18.** A method for producing a nutritional product comprising a shell containing a fat-and-carbohydrate mixture, in particular a cocoa mixture, and a core which is at least partially covered by the shell, said core being of a gel-like consistency, in particular according to one of claims 1 and 4 to 14, comprising

x) preparing a pre-formed shell of a fat-and-carbohydrate mixture, in particular a cocoa mixture,
y) preparing a liquid composition with an amount (each based on the total weight of the composition) of

a) a protein component of 0.5 to 10 wt-%,
b) a carbohydrate component of 65 to 82 wt-%, and
c) water of 10 to 30 wt-%, and

z) filling the liquid composition into the shell, cooling and sealing the same,

wherein gas is added to the liquid composition according to process step y) in such a way that the core of the nutritional product obtained has a gas content of 11 to 50 volume-% (volume-% of the gas is based on the total volume of the core).

**19.** The method according to claim 18, wherein step y) is carried out through dissolving the protein component in water in a step y1), mixing and dissolving the carbohydrate component, the optional additives and the optional stimulant component in a step y2) with heating, and mixing the protein component-containing solution according to step y1) with the stimulant-containing solution according to step y2) in a step y3).

**Revendications**

**1.** Produit alimentaire, comportant un enrobage, contenant un mélange de graisses et de glucides, et un noyau au moins partiellement enveloppé par ledit enrobage, ledit noyau étant présent dans une consistance en forme de gel et contenant (respectivement par rapport au poids total du noyau)

a) de 0,5 à 10 % en poids d'un composant de protéine,
b) de 65 à 82 % en poids d'un composant de glucide présent sous forme d'une phase cristalline de glucide et d'une phase non-cristalline de glucide, et
c) de 10 à 30 % en poids de l'eau,

et dans lequel le produit alimentaire contient de 11 à 50 % en volume du gaz dans le noyau (volume de gaz par rapport au volume du noyau).

**2.** Produit alimentaire, comportant un enrobage, contenant un mélange de graisses et de glucides, et un noyau au moins partiellement enveloppé par ledit enrobage, ledit noyau étant présent dans une consistance en forme de gel et contenant (respectivement par rapport au poids total du noyau)

a) de 0,5 à 10 % en poids d'un composant de protéine,
b) de 65 à 82 % en poids d'un composant de glucide présent sous forme d'une phase cristalline de glucide et d'une phase non-cristalline de glucide,
c) de 10 à 30 % en poids de l'eau, et
d) un mélange de stimulant de la taurine et de la caféine de 0,20 à 8,0 % en poids.

**3.** Produit alimentaire selon la revendication 2, le produit contenant de 11 à 50 % en volume du gaz dans le noyau (volume de gaz par rapport au volume du noyau).

**4.** Produit alimentaire selon la revendication 1, le produit contenant de 0,20 à 8,0 % en poids d'un composant stimulant contenant de la caféine dans le noyau.

**5.** Produit alimentaire selon la revendication 4, dans lequel le composant stimulant contenant de la caféine contient de la taurine et de la caféine.

**6.** Produit alimentaire selon la revendication 4, dans lequel le composant stimulant contenant de la caféine est du guarana.

**7.** Produit alimentaire selon l'une quelconque des revendications précédentes, dans lequel le mélange de graisses et de glucides est un mélange de cacao.

**8.** Produit alimentaire selon l'une quelconque des revendications précédentes, dans lequel la phase cristalline de glucide comprend du saccharose, du glucose, de l'isomaltulose ou une combinaison de ceux-ci, et la phase non-cristalline de glucide comprend du sirop de glucose.

**9.** Produit alimentaire selon l'une quelconque des revendications précédentes, dans lequel le composant de protéine est de la gélatine.

**10.** Produit alimentaire selon l'une quelconque des revendications précédentes, dans lequel le noyau est exempt de graisse.

**11.** Produit alimentaire selon l'une quelconque des revendications précédentes, le produit alimentaire présentant une proportion de 50 à 95 % en poids de l'enrobage et de 50 à 5 % en poids du noyau (respectivement par rapport au poids total du produit).

**12.** Produit alimentaire selon l'une quelconque des revendications précédentes, dans lequel le mélange de cacao est du chocolat.

**13.** Produit alimentaire selon l'une quelconque des revendications précédentes, dans lequel le noyau comprend au moins un additif.

**14.** Produit alimentaire selon l'une quelconque des revendications précédentes, dans lequel le noyau, l'enrobage ou tous les deux comprend/comprennent au moins un aromatisant.

**15.** Procédé pour la fabrication d'un produit alimentaire, le produit comportant un enrobage, contenant un mélange de graisses et de glucides, notamment un mélange de cacao, et un noyau au moins partiellement enveloppé par ledit enrobage et présentant une consistance en forme de gel, notamment selon l'une quelconque des revendications 2 et 7 à 14, le procédé comprenant les étapes consistant à

    x) fournir un enrobage préformé à partir d'un mélange de graisses et glucides, notamment d'un mélange de cacao,
    y) fournir une composition liquide contenant (respectivement par rapport au poids total de la composition),

        a) de 0,5 à 10 % en poids d'un composant de protéine,
        b) de 65 à 82 % en poids d'un composant de glucide, et
        c) de 10 à 30 % en poids de l'eau, et
        d) un mélange de stimulant de la taurine et de la caféine de 0,20 à 8,0 % en poids, et

    z) remplir l'enrobage avec la composition liquide, laisser refroidir et fermer l'enrobage.

**16.** Procédé selon la revendication 15, dans lequel l'étape y) est effectuée en solvant le composant de protéine dans de l'eau dans une étape y1), en mélangeant et solvant, sous réchauffement, le composant de glucide, des additifs optionnels et le composant stimulant dans une étape y2), et en mélangeant, dans une étape y3), la solution contenant le composant de protéine selon l'étape y1) avec la solution contenant des stimulants selon l'étape y2).

**17.** Procédé selon la revendication 15 ou 16, dans lequel du gaz est introduit dans la composition liquide selon l'étape y), de telle sorte que le noyau du produit alimentaire obtenu présente une teneur en gaz de 11 à 50 % en volume (% en volume du gaz par rapport au volume total du noyau).

**18.** Procédé pour la fabrication d'un produit alimentaire, le produit comportant un enrobage, contenant un mélange de graisses et de glucides, notamment un mélange de cacao, et un noyau au moins partiellement enveloppé par ledit enrobage et présentant une consistance en forme de gel, notamment selon l'une quelconque des revendications 1 et 4 à 14, le procédé comprenant les étapes consistant à

x) fournir un enrobage préformé à partir d'un mélange de graisses et glucides, notamment d'un mélange de cacao,

y) fournir une composition liquide contenant (respectivement par rapport au poids total de la composition),

a) de 0,5 à 10 % en poids d'un composant de protéine,
b) de 65 à 82 % en poids d'un composant de glucide, et
c) de 10 à 30 % en poids de l'eau, et

z) remplir l'enrobage avec la composition liquide, laisser refroidir et fermer l'enrobage,

dans lequel du gaz est introduit dans la composition liquide selon l'étape y), de telle sorte que le noyau du produit alimentaire obtenu présente une teneur en gaz de 11 à 50 % en volume (% en volume du gaz par rapport au volume total du noyau).

**19.** Procédé selon la revendication 18, dans lequel l'étape y) est effectuée en solvant le composant de protéine dans de l'eau dans une étape y1), en mélangeant et solvant, sous réchauffement, le composant de glucide, des additifs optionnels et le composant stimulant optionel dans une étape y2), et en mélangeant, dans une étape y3), la solution contenant le composant de protéine selon l'étape y1) avec la solution contenant des stimulants selon l'étape y2).

Figur

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19940747 A1
- WO 03079818 A1
- US 20080050472 A1
- BE 1016573 A6
- EP 1839496 A
- DE 202010009729
- EP 0324072 A1
- US 20070172542 A1